Europäisches Patentamt

European Patent Office

Office européen des brevets

(19)

(11) Veröffentlichungsnummer : **0 047 416**
**B2**

(12) **NEUE EUROPÄISCHE PATENTSCHRIFT**

(45) Veröffentlichungstag der neuen Patentschrift :
27.07.88

(51) Int. Cl.⁴ : **A 01 D 34/67**

(21) Anmeldenummer : **81106513.5**

(22) Anmeldetag : **21.08.81**

(54) Sicherheitsschaltvorrichtung für einen Elektrorasenmäher.

(30) Priorität : **04.09.80 DE 3033346**
**26.03.81 DE 8108936 U**

(43) Veröffentlichungstag der Anmeldung :
**17.03.82 Patentblatt 82/11**

(45) Bekanntmachung des Hinweises auf die Patenterteilung : **24.10.84 Patentblatt 84/43**

(45) Bekanntmachung des Hinweises auf die Entscheidung über den Einspruch : **27.07.88 Patentblatt 88/30**

(84) Benannte Vertragsstaaten :
**AT BE CH FR IT LI NL SE**

(56) Entgegenhaltungen :
AT-B-    257 231
DE-A- 2 617 460
DE-A- 2 626 201
DE-A- 2 904 021
DE-A- 2 904 021
DE-A- 3 002 914
DE-B- 2 511 369
DE-U- 7 302 697
DE-U- 7 402 567
DE-U- 7 533 826
DE-U- 7 621 569
DE-U- 7 721 840

(73) Patentinhaber : **Wolf-Geräte GmbH**
**Gregor-Wolf-Strasse 16 Postfach 860 und 880**
**D-5240 Betzdorf/Sieg (DE)**

(72) Erfinder : **Kolb, Walter**
**Martin-Luther-Strasse 59**
**D-5240 Betzdorf/Sieg (DE)**
Erfinder : **Kalleicher, Artur**
**Höferwald 8**
**D-5242 Kirchen/Sieg (DE)**
Erfinder : **Schütz, Eberhard**
**Betzdorferstrasse 92**
**D-5244 Daaden (DE)**

(74) Vertreter : **Wallach, Curt, Dipl.-Ing. Patentanwälte**
**Dipl.-Ing. C.Wallach et al**
**Dipl.-Ing. G. Koch Dr.T.Haibach Dipl.-Ing. R. Feldkamp**
**Kaufingerstrasse 8**
**D-8000 München 2 (DE)**

EP 0 047 416 B2

**Beschreibung**

Die Erfindung bezieht sich auf eine Sicherheitsschaltvorrichtung der im Oberbegriff des Patentanspruchs 1 angegebenen Gattung.

Eine derartige Sicherheitsschaltvorrichtung ist aus der DE-U-76 21 569 bekannt. Hierbei kann eines der beiden funktionsmäßig austauschbaren Schaltglieder, die beide am Schiebegriff angeordnet sind, nach Anschalten des Motors wieder losgelassen werden, so daß der Mäher nach dem Anlassen mit nur einer Hand am Griffbügel geführt werden kann, wie dies unter gewissen Umständen erforderlich ist, um beispielsweise das Elektrokabel aus dem Mähbereich zu entfernen oder Büsche und Äste aus dem Weg zu räumen. Bei Rasenmähern mit einer Sicherheitsschaltvorrichtung gemäß der DE-U-73 02 697 war dies beispielsweise nicht möglich, weil bereits das Loslassen eines Schaltgliedes zu einer Abschaltung des Motors führte.

Bei einer anderen gattungsgemäßen Sicherheitsschaltvorrichtung, wie sie in der DE-A-26 26 201 beschrieben ist, sind die Schaltglieder, von denen eines nach dem Anlassen wieder freigegeben werden kann, ohne den Motor stillzusetzen, als lichtempfindliche Sensoren ausgebildet, die am Schiebegriff angeordnet sind und zum Zwecke der Einschaltung mit jeweils einer Hand abgedeckt werden müssen. Auch hier sind die Schaltglieder funktionsmäßig austauschbar, d.h. die Schaltfolge spielt keine Rolle.

Bei all diesen bekannten Sicherheitsschaltvorrichtungen sind die Schaltglieder symmetrisch zu einer vertikalen, in Fahrtrichtung verlaufenden Mittelebene für die rechte und linke Hand am Führungsgriff oder in der Nähe des Führungsgriffes so angeordnet, daß sie jeweils mit der zugeordneten Hand, die den Griffbügel führt, betätigbar sind. Dies kann zu einem unbeabsichtigten Anschalten führen, wenn der Mäher mit beiden Händen am Boden verschoben wird. Diese Gefahr besteht, wenn der Rasenmäher von Kindern oder anderen Personen bedient wird, denen die Schaltfunktion nicht genau bekannt ist. Bei der mit Fotosensoren arbeitenden Schaltvorrichtung ist sogar ein unbeabsichtigtes Anschalten zu befürchten, wenn der Mäher auf dem Boden umgelegt wird, um beispielsweise die Messer zu inspizieren, weil dann unter unglücklichen Umständen beide Sensoren abgedunkelt werden können.

Der Erfindung liegt daher die Aufgabe zugrunde, eine gattungsgemäße Sicherheitsschaltvorrichtung derart zu verbessern, daß sie bei hohem Bedienungskomfort die Gefahr von Verletzungen durch versehentlich angeschalteten Motor mit Sicherheit verhindert.

Gemäß der Erfindung wird die gestellte Aufgabe gelöst durch die im Kennzeichnungsteil des Patentanspruchs 1 angegebenen Merkmale.

Durch die Erfindung wird erreicht, daß die Einschaltung nur durch eine vorbestimmte Schaltfolge bewirkt werden kann, die der Bedienungsperson des Rasenmähers bekannt, unbefugten Personen, insbesondere Kindern, jedoch nicht ohne weiteres geläufig ist. Auf diese Weise wird gewährleistet, daß beim Erfassen des Führungsgriffes allein das Einschalten mit Sicherheit nicht bewirkt werden kann, weil zum Zwecke der Einschaltung in einer vorbestimmten Reihenfolge eine bestimmte Hand ein außerhalb des Griffbereichs des Führungsbügels liegendes Schaltglied betätigen muß, das zum Zwecke der Verschiebung des Rasenmähers nicht mit erfaßt werden kann.

Zweckmäßigerweise ist das zweite Schaltglied als Schaltbügel ausgebildet, der wahlweise mit beiden Händen oder mit der einen oder anderen Hand erfaßt werden kann, die den Schiebegriff führt.

Das erste Schaltglied ist gemäss einer bevorzugten Ausführung der Erfindung als Tastknopf ausgebildet, der an einem die Holme des Schiebegriffs verbindenden Gehäuse derart angeordnet ist, dass er nicht ohne weiteres mit der gleichen Hand betätigbar ist, die den Schaltbügel hält.

Nachstehend wird ein Ausführungsbeispiel der Erfindung an Hand der Zeichnung beschrieben. In der Zeichnung zeigen :

Figur 1 eine perspektivische Ansicht eines Rasenmähergriffbügels mit den Schaltgliedern der erfindungsgemässen Sicherheitsschaltvorrichtung,

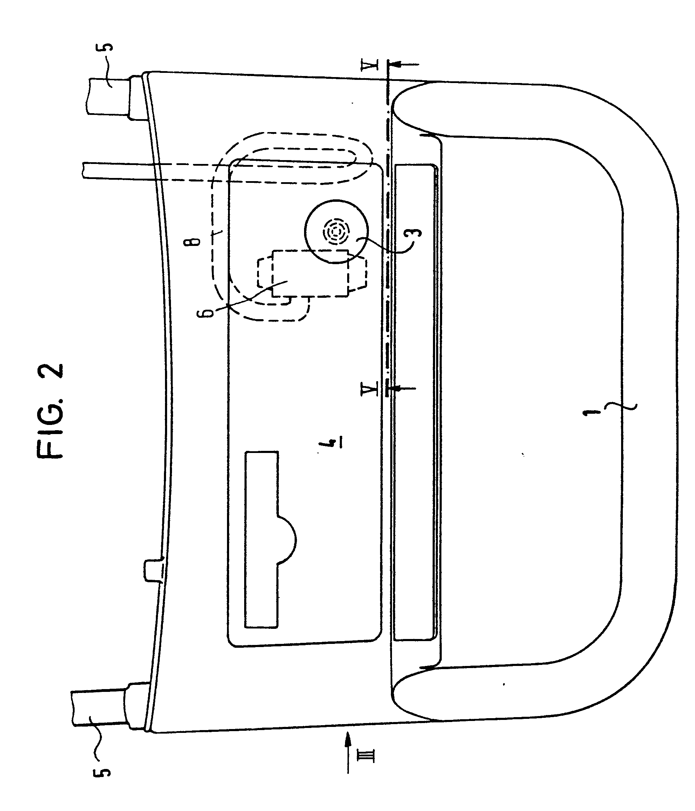

Fig. 2 eine Draufsicht auf den Griffbügel,

Fig. 3 eine Seitenansicht des Griffbügels in Richtung des Pfeiles III gemäss Fig. 2 betrachtet,

Fig. 4 einen Schnitt nach der Linie IV - IV gemäss Fig. 2,

Fig. 5 einen durch Griffbügel, Isolierstoffgehäuse und Tastknopf geführten Längsschnitt, und

Fig. 6 einen Teilschnitt nach der Linie V - V gemass Fig. 2 in grösserem Massstab.

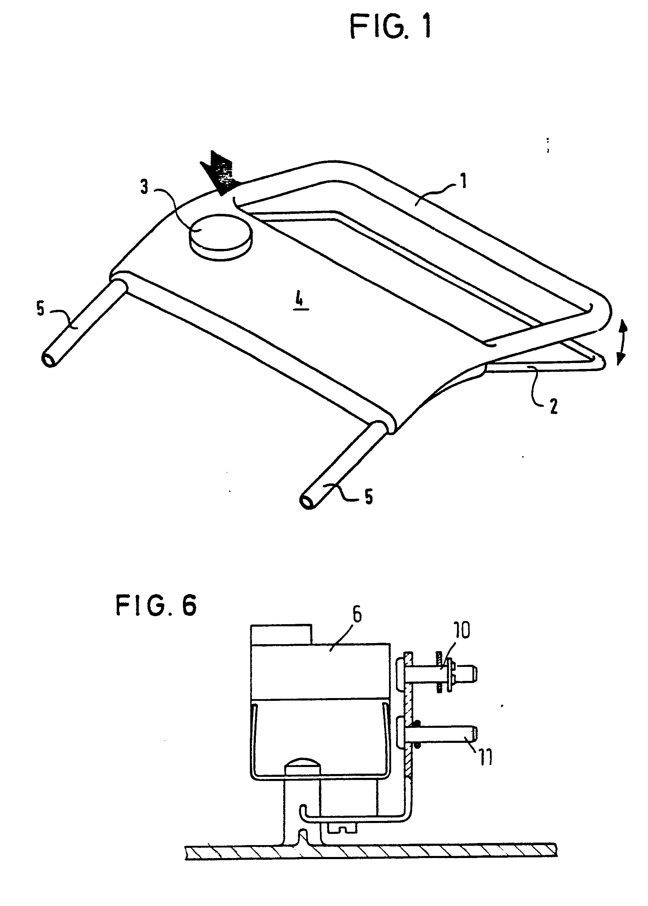

Der in Figur 1 nicht dargestellte Rasenmäher west einen Schiebegriff 1 auf, der die nach dem Mähergehäuse führenden Holme 5 verbindet. Zwischen den Holmen befindet sich ein Isolierstoffgehäuse 4, welches die Schaltvorrichtung aufnimmt. Das erste Schaltglied für die Schaltvorrichtung ist als Tastknopf 3 ausgebildet, während das zweite Schaltglied von einem Schaltbügel 2 gebildet ist. Der Tastknopf 3 kann von oben her eingedrückt werden und überführt einen elektrischen Schalter in die Einschaltstellung, vorausgesetzt, dass vorher der Schaltbügel 2 zu dem Schiebegriff 1 hin verschwenkt wurde. Der im Inneren des Gehäuses 4 angeordnete Schalter 6, der gemäss dem Ausführungsbeispiel als Wippenschalter mit Schaltwippe 9 ausgebildet ist, steht über ein Kabel 8 mit dem Motor des Rasenmähers bzw. mit dessen Netzanschluss in Verbindung.

Der Tastknopf 3 geht nach Betätigung in die Ausgangslage zurück, jedoch bleibt der Schalter 6 geschlossen, solange der Schaltbügel 2 in der Einschaltstellung gehalten wird.

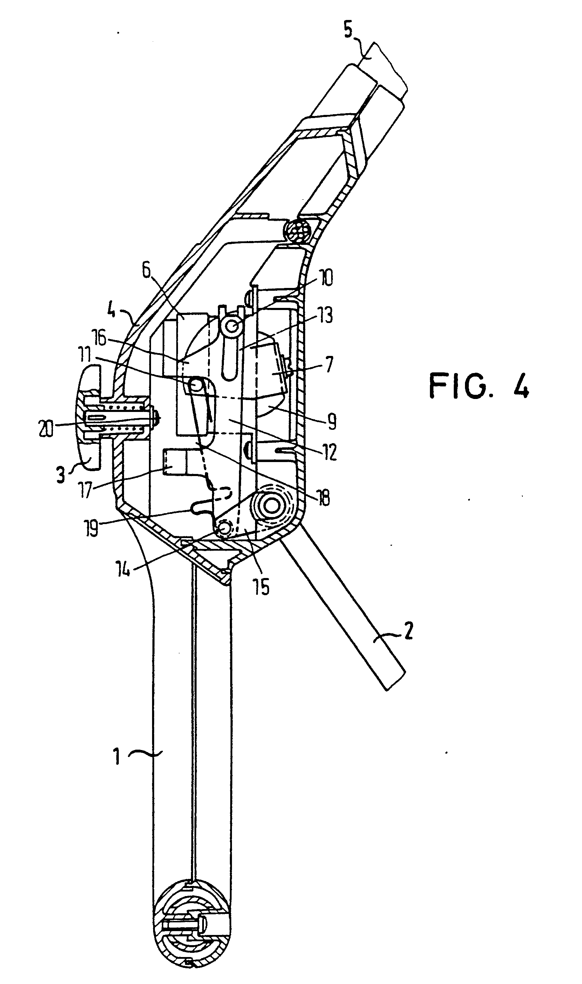

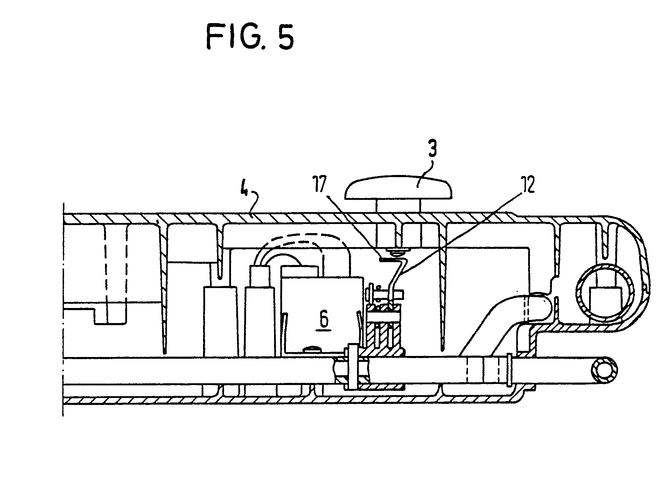

Die Ausbildung und Wirkungsweise der erfindungsgemässen Schaltvorrichtung ist am besten

aus den Figuren 4 bis 6 erkennbar. An der Schaltwippe 9 des Ein-Aus-Schalters 6 ist ein Mitnehmer 7 festgelegt, welcher einen Einschaltzapfen 10 und einen Ausschaltzapfen 11 trägt. Diese Schaltzapfen wirken mit einem Zwischenhebel 12 zusammen, der den Einschaltzapfen 10 in einer Schaltgabel 13 führt. An seinem der Schaltgabel 13 gegenüberliegenden Ende ist der Zwischenhebel 12 mittels eines Gelenkstiftes 14 an einem Gabelkopf 15 angelenkt, der starr mit dem Schaltbügel 2 verbunden ist. Der Zwischenhebel 12 weist einen mit dem Ausschaltzapfen 11 zusammenwirkenden Schaltnocken 16 und einen am Ende abgewinkelten Schaltarm 17 auf, der in Ruhestellung gemäss Figur 4 im Abstand zur Wirkungslinie des Tastknopfes 3 liegt, jedoch bei angezogenem Schaltbügel 2 in den Bewegungsbereich des Tastkopfes 3 verschoben wird.

Eine Blattfeder 18 ist mit ihrem einen Ende an dem Ausschaltzapfen 11 und mit ihrem anderen Ende an dem Gelenkstift 14 verankert. Im gemäss Fig. 4 unteren Abschnitt weist die Blattfeder 18 eine S-förmige Federschleife 19 auf.

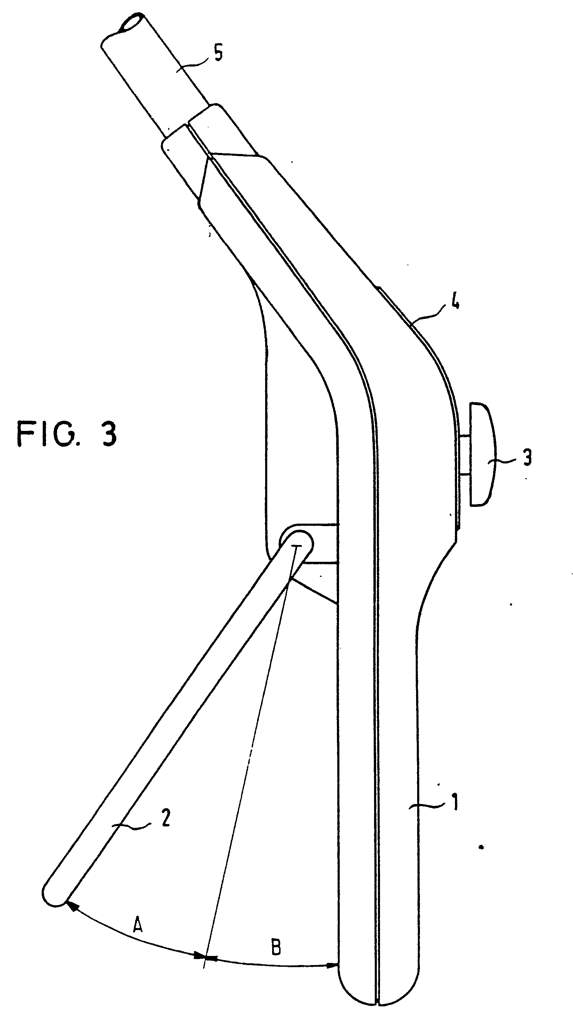

Die erfindungsgemässe Schaltvorrichtung arbeitet wie folgt : Wenn der Schaltbügel 2 aus der aus Figur 3 bzw. 4 dargestellten Stellung über den Schaltbogenbereich A und B verschwenkt, d. h. an den Schiebegriff 1 herangezogen wird, dann verschiebt der Gabelkopf 15 über den Gelenkstift 14 den Zwischenhebel 12 gemäss Figur 4 nach oben, wobei der Einschaltzapfen 10 in dem von der Schaltgabel 13 gebildeten Schlitz läuft, ohne durch diese Bewegung betätigt zu werden, Vollendung dieser Schaltbügelbewegung liegt das abgewinkelte Ende des Schaltarmes 17 unter dem inneren Ende 20 des Tastknopfes 3. Wenn nun in angezogener Stellung des Schaltbügels 2 der Tastknopf 3 gedrückt wird, dann wirkt dieser auf den Schaltarm 17 und verschwenkt den Zwischenhebel 12 im Uhrzeigersinn um den Gelenkstift 14. Dadurch wird der Einschaltzapfen 10 von der Schaltgabel 13 mitgenommen, und der Mitnehmer 7 überführt die Schaltwippe 9 in die Einschaltstellung. Diese Einschaltstellung bleibt erhalten, auch wenn der Tastknopf losgelassen wird und durch die Rückstellfeder 21 in die Ausgangsstellung zurückkehrt. Die Einschaltstellung bleibt auch erhalten, wenn der Schaltbügel 2 über einen vorbestimmten Winkelbereich « B » (Figur 3) im Nahbereich des Schiebegriffes 1 verschwenkt wird, was bei der Schiebebewegung des Rasenmähers geschehen kann.

Wird jedoch der Schaltbügel 2 losgelassen, so kehrt dieser unter der Wirkung seiner Rückstellfeder in die aus Figur 3 und 4 ersichtliche Stellung zurück, nachdem der Winkelbereich « A + B » zurückgelegt wurde. Hierbei wird der Zwischenhebel 12 über den Gelenkstift 14 vom Gabelkopf gemäss Figur 4 nach unten gezogen und dadurch wird auch die als Schnappfeder ausgebildete Blattfeder 18 an ihrem unteren Ende nach unten geführt und somit in ihrer Federschleife 19 gespannt. Sobald die Vorspannkraft der Schaltwippe 9 überwunden ist, zieht die Schnappfeder 18 den Mitnehmer 7 mit der Schaltwippe 9 in die Ausschaltstellung. Durch diese Schnappbewegung wird mit Sicherheit eine Lichtbogenbildung beim Ausschalten verhindert. Um jedoch auch bei einem eventuellen Bruch der Feder oder einer Störung der Funktion der Feder 18 ein Ausschalten zu gewährleisten, ist der Schaltnocken 16 am Zwischenhebel 12 vorgesehen. Dieser wirkt im Verlauf der Rückstellbewegung des Zwischenhebels 12 unmittelbar auf den Ausschaltzapfen 11 ein und bewirkt somit eine Rückstellung der Schaltwippe.

## Patentansprüche

1. Sicherheitsschaltvorrichtung für Elektrorasenmäher mit zwei Schaltgliedern, von denen das erste Schaltglied (3) mit der einen Hand und das zweite Schaltglied (2) mit der anderen, einen Schiebegriff (1) erfassenden Hand betätigbar ist, bei der das Einschalten des Antriebselektromotors nur möglich ist, wenn beide Schaltglieder betätigt sind, von denen das eine nach seiner Betätigung dann wieder losgelassen werden kann und bei der die Abschaltung des Motors durch Loslassen des anderen Schaltgliedes erfolgt, dadurch gekennzeichnet, daß die beiden Schaltglieder funktionsmäßig so gestaltet sind, daß zur Anschaltung des Motors das zweite Schaltglied (2) betätigt und gehalten werden muß, und daß danach das erste Schaltglied (3) betätigt werden muß und wieder losgelassen werden kann, und daß somit die Abschaltung des Motors ausschließlich durch Loslassen des zweiten Schaltgliedes (2) erfolgt.

2. Sicherheitsschaltvorrichtung nach Anspruch 1, dadurch gekennzeichnet, dass das zweite Schaltglied (2) als in die Ausschaltstellung vorgespannter Schaltbügel ausgebildet ist, der in der Nähe des Schiebegriffs (1) des Rasenmähers angeordnet ist und sich über die gesamte Breite des Schiebegriffs (1) unter diesem und parallel zu diesem erstreckt.

3. Sicherheitsschaltvorrichtung nach Anspruch 1, dadurch gekennzeichnet, dass das erste als Tastknopf (3) ausgebildete Schaltglied auf einem, die beiden Holme (5) des Schiebegriffes (1) verbindenden Gehäuse (4) angeordnet ist, das den die An- und Abschaltung bewirkenden elektrischen Schalter (6) aufnimmt.

4. Sicherheitsschaltvorrichtung nach den Ansprüchen 2 und 3, dadurch gekennzeichnet, dass der Schaltbügel (2) über einen Zwischenhebel (12) mit einem Mitnehmer (7) des Schalters (6) derart gekuppelt ist, dass der Zwischenhebel (12) bei Betätigung des Schaltbügels (2) in eine Bereitschaftsstellung überführbar ist, in der der Tastknopf (3) auf den Zwischenhebel (12) im Sinne einer Einschaltbewegung des Schalters (6) einwirken kann.

5. Sicherheitsschaltvorrichtung nach Anspruch 4, dadurch gekennzeichnet, dass der Schaltbügel (2) über einen Gabelkopf (15) und einen Gelenkstift (14) an dem Zwischenhebel (12) angelenkt ist, der längsverschieblich am Schalter (6) gelagert ist und mittels einer Schaltgabel (13) einen mit dem Mitnehmer (7) verbundenen Einschaltzapfen (10) führt.

6. Sicherheitsschaltvorrichtung nach Anspruch 5, dadurch gekennzeichnet, dass der Zwischenhebel (12) einen abgekröpften Schaltarm (17) aufweist, der in Bereitschaftsstellung des Zwischenhebels vor dem Tastknopf (3) zu liegen kommt und durch diesen im Sinne einer Einschaltung verschwenkbar ist.

7. Sicherheitsschaltvorrichtung nach einem der Ansprüche 4 - 6, dadurch gekennzeichnet, dass zwischen dem Mitnehmer (7) und dem Zwischenhebel (12) eine Feder (18) ausgespannt ist, die bei Überschreiten einer vorbestimmten Vorspannkraft eine Schaltwippe (9) des Schalters (6) in die Ausschaltstellung schnappen lässt.

8. Sicherheitsschaltvorrichtung nach Anspruch 7, dadurch gekennzeichnet, dass die als Blattfeder mit Federschleifen (19) ausgebildete Feder (18) an einem Ende an einem den Zwischenhebel (12) schwenkbar lagernden Gelenkstift (14) und mit ihrem anderen Ende an einem Ausschaltzapfen (11) des Mitnehmers (7) verankert ist.

9. Sicherheitsschaltvorrichtung nach den Ansprüchen 4 bis 8, dadurch gekennzeichnet, dass der Zwischenhebel (12) einen Schaltnocken (16) aufweist, der mit dem Ausschaltzapfen (11) des Mitnehmers (7) zusammenwirkt.

## Claims

1. A safety switching device for electric lawnmowers having two switch members of which the first switch member (3) can be actuated with one hand and the second switch member (2) with the other hand grasping a pushing handle (1) and wherein the switching on of the drive motor is only possible when both switch members are actuated one of said switch members can be released after actuation and wherein switching off the motor is effected by releasing the other switch member, characterized in that the two switch members are functionally so constructed that for switching on the motor the second switch member (2) must be actuated and held and that thereafter the first switch member (3) must be actuated and can be released again ; and in that the switching off of the motor exclusively takes place by releasing the second switch member (2).

2. A safety device in accordance with claim 1, characterised in that the second switch member (2) is constructed as a switch hoop which is biased into the switched off position which is arranged in the vicinity of the pushing handle (1) of the lawnmower and which extends over the full with of the pushing handle (1) beneath and parallel to the same.

3. A safety switching device in accordance with claim 1, characterised in that the first switch member, which is constructed as a push button (3), is arranged on a housing (4) which connects the two shafts (5) of the pushing handle (1) and which receives the electrical switch (6) which brings about the switching and the switching off.

4. A safety switching device in accordance with the claims 2 and 3, characterised in that the switch hoop (2) is coupled with a follower (7) of the switch (6) via an intermediate lever (12) in such a way that the intermediate lever (12) can be moved, on actuation of the switch hoop (2) into a position ready for operation in which the push knob (3) can act on the intermediate lever (12) in the sense of a switching on movement of the switch (6).

5. A safety switching device in accordance with claim 4, characterised in that the switch hoop (2) is pivotably connected to the intermediate lever (12) via a forked head (15) and a hinge pin (14), with the lever being longitudinally displaceably journalled at the switch (6) and guiding a switching on pin (10) which is connected with the follower (7) by means of a switch fork (13).

6. A safety switching device in accordance with claim 5, characterised in that the intermediate lever (12) has a cranked switching arm (17) which comes to lie in front of the push knob (3) when the intermediate lever is in the position ready for operation and can be pivoted by the push knob (3) in the sense of switching on the motor.

7. A safety switching device in accordance with one of the claims 4 to 6, characterised in that a spring (18) is provided between the followers and the intermediate lever (12) and permits a switch rocker (9) of the switch to snap into the switched off position when a predetermined bias force is exceeded.

8. A safety switching device in accordance with claim 7, characterised in that the spring (18) which is constructed as a leaf spring with spring loops (19) is anchored at one end to a pivot pin (14) on which the intermediate lever (12) is pivotably mounted and at its other end to a switching off pin (11) of the follower (7).

9. A safety switching device in accordance with claims 4 to 8, characterised in that the intermediate lever (12) has a switching cam (16) which cooperates with the switching off pin (11) of the follower (7).

## Revendications

1. Dispositif de sécurité par coupure de courant pour tondeuses à gazon électriques, comportant deux éléments de commande, dont le premier (3) peut être actionné de l'une des mains et le second (2), de l'autre main saisissant une poignée (1) dans lequel la mise en circuit du moteur électrique de commande n'est possible que lorsque les deux éléments de commande ont été actionnés, dont l'un peut être relâché après son actionnement, tandis que la mise hors circuit du moteur est produite par relâchement de l'autre élément de commande, le dispositif de sécurité par coupure de courant étant caractérisé en ce que les deux éléments de commande sont, pour le fonctionnement, prévus sous une forme telle que, pour la mise en circuit du moteur, le second élément de commande (2) doit être actionné et être maintenu, et qu'après cela, le premier élément de commande (3) doit être actionné et puisse être relâché, et en ce que, de cette façon, la mise hors circuit du moteur a lieu exclusivement par relâchement du second élément de commande (2).

2. Dispositif de sécurité par coupure de courant suivant la revendication 1, caractérisé en ce que le second élément de commande (2) est prévu sous la forme d'un étrier de commande soumis à une tension préalable dans la position de déconnexion, étrier de commande qui est monté au voisinage de la poignée (1) de la tondeuse à gazon et qui s'étend sur toute la largeur de la poignée (1), en dessous de celle-ci et parallèlement à celle-ci.

3. Dispositif de sécurité par coupure de courant suivant la revendication 1, caractérisé en ce que le premier élément de commande, qui est prévu sous la forme d'un bouton-poussoir (3), est monté sur un boîtier (4) reliant les deux branches (5) de la poignée (1), boîtier qui contient le commutateur électrique (6) déterminant la mise en circuit et la mise hors circuit.

4. Dispositif de sécurité par coupure de courant suivant les revendications 2 et 3, caractérisé en ce que l'étrier de commande (2) est accouplé par un levier intermédiaire (12) à un organe d'entraînement (7) du commutateur (6), de telle façon que, lors de l'actionnement de l'étrier de commande (2), le levier intermédiaire (12) puisse être amené à une position préparatoire pour laquelle le bouton-poussoir (3) puisse agir sur le levier intermédiaire (12) pour provoquer un mouvement de mise en circuit du commutateur (6).

5. Dispositif de sécurité par coupure de courant suivant la revendication 4, caractérisé en ce que l'étrier de commande (2) est articulé, par l'intermédiaire d'une tête de fourche (15) et d'un axe d'articulation (14), au levier intermédiaire (12), qui est monté sur le commutateur (6) de façon à pouvoir effectuer un mouvement de déplacement dans le sens longitudinal, et qui, par l'intermédiaire d'une fourche de commande (13), guide un bouton de mise en circuit (10) qui est relié à l'organe d'entraînement (7).

6. Dispositif de sécurité par coupure de courant suivant la revendication 5, caractérisé en ce que le levier intermédiaire (12) comporte un bras de commande coudé (17) qui, pour la position préparatoire du levier intermédiaire, vient se placer à l'avant du bouton-poussoir (3) et peut, à l'intervention de celui-ci, pivoter pour provoquer une mise en circuit.

7. Dispositif de sécurité par coupure de courant suivant l'une quelconque des revendications 4 à 6, caractérisé en ce qu'entre l'organe d'entraînement (7) et le levier intermédiaire (12) est tendu un ressort (18) qui, lorsqu'une force de tension préalable déterminée d'avance est dépassée, fait rebondir un culbuteur de commande (9) du commutateur (6) dans la position de mise hors circuit.

8. Dispositif de sécurité par coupure de courant suivant la revendication 7, caractérisé en ce que le ressort (18), qui est prévu sous la forme d'un ressort-lame avec boucle de ressort (19), est fixé, par l'une des extrémités, à un axe d'articulation (14) qui supporte le levier intermédiaire (12) de façon à permettre le pivotement de celui-ci, et, par son autre extrémité, à un bouton de mise hors circuit (11) de l'organe d'entraînement (7).

9. Dispositif de sécurité par coupure de courant suivant les revendications 4 à 8, caractérisé en ce que le levier intermédiaire (12) est muni d'une came de commande (16) qui coopère avec le bouton de mise hors circuit (11) de l'organe d'entraînement (7).

# FIG. 1

# FIG. 6

# FIG. 2

FIG. 3

FIG. 4

FIG. 5